# EUROPEAN PATENT APPLICATION

(11) **EP 4 717 343 A1**
(43) Date of publication of application: **01.04.2026**
(21) Application number: 25202325.4
(22) Date of filing: 16.09.2025
(51) Int. Cl.: B01D 53/04, B01D 53/047

(54) **METHOD AND SYSTEM FOR GAS SEPARATION IN FIXED BEDS**

(30) Priority: 24.09.2024 IN 202421071987
(71) Applicant: Tata Consultancy Services Limited, Maharashtra (IN)
(72) Inventor: SUHAIL, Mohammed, 411057 Pune, Maharashtra (IN); CHAUDHARY, Ayush, 201309 Noida, Uttar Pradesh (IN); RUNKANA, Venkataramana, 411028 Pune, Maharashtra (IN); BADHAN, Navneet Singh, 201309 Noida, Uttar Pradesh (IN); SUBRAMANIAN, Sivakumar, 411057 Pune, Maharashtra (IN); RAO, Davuluri Prahlada, 500049 Hyderabad, Telangana (IN)
(74) Representative: Goddar, Heinz J.

(57) **Abstract**

This disclosure relates generally to a method of separating one or more target gases from a flue gas using fixed bed reactors. The target gas separation involves swing-adsorption mechanisms. State-of-the-art methods utilizing fixed beds suffers relatively high-pressure drops. To overcome the pressure-drop, coarser particles are used but this further lowers the adsorption capacity of the target gas. These drawbacks also affect the size of the fixed bed reactor, limiting its applicability for gas separation in mobile sources. The present invention provides the target gas separation from the fixed beds that involves simultaneous and sequential treatment of the flue gas in various stages of the swing-adsorption mechanisms. An integral heat recovery unit facilitates a plurality of transfers during target gas separation from the flue gas and manages entire heat requirement of the target gas separation process.

## Description

### CROSS-REFERENCE TO RELATED APPLICATIONS AND PRIORITY

The present application claims priority to Indian application no. 202421071987 filed on September 24, 2024.

### TECHNICAL FIELD

The disclosure herein generally relates to gas separation, and, more particularly, to methods and systems of gas separation in a fixed bed of packed beds.

### BACKGROUND

Many combustion processes produce flue gases contain gases such as carbon dioxide that contribute to global warming. The flue gases of a conventional power station typically contain from about 4% (by volume) to about 14% carbon dioxide (CO₂). To meet the Paris commitment of limiting the global temperature rise to 1.5 degrees many measures have been taken for transitioning from non-renewable to renewable energy sources. One of the most challenging tasks of this transition is lowering CO₂ emissions from the transport sector. Currently, measures taken to reduce CO₂ emissions in the transportation sector includes use of alternative fuels, such as biofuels, natural gas (NG), liquefied petroleum gas (LPG), and Hydrogen (H2), reduction of fuel consumption which is achieved through improved engine efficiency by using eco-driven technologies, and optimization of the engine energy-balance which involves transforming waste heat flows through Organic Rankine cycle. Vehicle electrification is another way by which carbon emissions from the transport sector could be reduced. While greener solutions like electrification may be practical for passenger and smaller vehicles, larger vehicles such as heavy-duty trucks that ply long distances on a single fill, and container ships still use carbonaceous fuels. Effluent gas streams from the engines, turbines or boilers rich in CO₂ or other equally or more potent greenhouse gases are difficult to treat in ways that are both technically and economically practical, and there remains a need for better treatment techniques. Therefore, there is a clear need for efficient methods of capturing these gases from the flue gases, producing a concentrated stream that can readily be transported to a safe storage site or to a further application.

Gas separation isolates or purifies gas components using physical or chemical methods to achieve higher purity or separate valuable gas components from feed gas mixture. It is becoming increasingly important for numerous industrial operations, including the treatment of emissions from coal-fired power plants, which aim to remove CO₂ from the flue gas to lessen the greenhouse effect. Additional applications are gaining traction, such as the separation and purification of commercially vital pure gases like H₂, methane (CH₄), and oxygen (O₂) from natural gas (gas mixture). The reversible affinity of the gas for a specific sorbent such as zeolites, alumina, or activated carbon, or a solvent such as MEA (mono-ethanolamine) impregnated in an inert support (alumina),, is used to separate it from the gaseous mixture. **In** cryogenic distillation gases are first liquified and separated based on the differences in their boiling points. Gas separation through the membrane depends upon the differential diffusion of one or more gases with the membrane material, leading to one molecule permeating faster (or more) than the others. Solvent-based technologies for separating CO₂ from the gases have been commercially used for a long time. The process is energy intensive and solvent degradation and its disposal along with their corrosive nature could be a concern.

Adsorption, on the other hand, employs porous materials to selectively adsorb one component selectively from a mixture. It is a more energy-efficient process compared to others that are utilized for gas separation and purification. Adsorption is used in several processes such as natural gas purification, air separation, and carbon capture, to name a few. The fixed bed adsorber, in which the flue gas flows over a packed bed of relatively large sorbent particles, is by far the most basic configuration for gas-solid separation processes. The process is carried out in a cyclical manner. The bed gets saturated along its length, beginning at the feeding point, and ending at the exit point, until the bed is almost saturated. The main disadvantage of using this configuration is the relatively high-pressure drops, even at moderate flow rates, resulting in a remarkably high footprint due to the inability to use high gas velocities in both adsorption and regeneration steps. For minimizing the pressure drop in fixed bed reactor coarser particle need to be used. This will lead to an increase in the heat and mass transfer resistance, which in turn lowers the CO₂ adsorption capacity of the process. These drawbacks also affect the size of the fixed bed reactor, limiting its applicability for gas separation in mobile sources. Despite its limitations, adsorption remains a prevalent method for gas separation due to its high selectivity, energy efficiency, and scalability. Its advantages, including lower operational temperatures, simpler design, and environmental benefits, often outweigh challenges like adsorbent saturation and degradation. These strengths make adsorption a valuable technique in various applications where the trade-offs are considered acceptable. In the fixed bed the choice of regeneration method depends on factors like the adsorbent type, CO₂ concentration, pressure, and energy requirements. TSA and PTSA are more effective for strongly adsorbed CO₂, while PSA and VSA cycles are simpler. These methods involve the efficient removal of target gases, such as carbon dioxide (CO₂) and volatile organic compounds (VOCs), from flue gas or similar gas streams prior to their release into the environment. The TSA process employs temperature variations to selectively adsorb target gases onto a solid adsorbent material at lower temperatures, followed by desorption through heating, while the PSA process utilizes pressure changes to achieve gas separation. By integrating these two methods, the system can leverage the strengths of both techniques, optimizing gas separation efficiency and enhancing the overall purification process. This hybrid approach is particularly beneficial for treating exhaust gases from various sources, including heavy-duty trucks, ships, and industrial facilities, ultimately producing a lean gas that is environmentally safe.

### SUMMARY

Embodiments of the present disclosure present technological improvements as solutions to one or more of the above-mentioned technical problems recognized by the inventors in conventional systems. For example, in one embodiment, a method of gas separation from a pre-treated feed gas is provided. The method includes receiving directing the pre-treated feed gas to a fixed bed. The fixed bed comprises one or more packed beds of one or more adsorbent material capable of adsorbing, and releasably binding, one or more target gas from the pre-treated feed gas, and wherein the pre-treated feed gas coming from a source through a heat recovery unit to the fixed bed gets processed in the heat recovery unit. The source of the pre-treated feed gas is combustion of fossil fuels from one or more fossil fuel-based combustion engines, industrial furnaces, boilers and turbines. Each packed bed of the one or more packed beds sequentially cycles through at least one of a plurality of stages of at least one swing-adsorption mechanisms comprising an adsorption stage, a heating stage, an evacuation stage, and a cooling stage at each timestamp. Each packed bed of the one or more packed beds has an entry or an exit for a plurality of lines comprising one or more feed lines and one or more product lines facilitating a plurality of gaseous transfers controlled by a plurality of valves. The one or more packed beds of the fixed bed in the adsorption stage adsorbs the one or more target gas from the pre-treated feed gas and releases a lean gas from an associated exit, in the adsorption stage. Further, the method includes injecting via the one or more feed lines, a processed stream of hot target gas from the entry of the at least one of the one or more packed beds in the heating stage, wherein the processed stream of hot target gas raises temperature of the at least one packed bed holding the one or more target gas adsorbed at the adsorption stage and exits the packed bed via the one or more product lines. Further, the method includes removing via the one or more product lines, the adsorbed target gas from an exit of the at least one of the one or more packed beds in the evacuation stage by depressurization. Further, the method includes injecting, via the one or more feed lines, a pre-treated stream of air to the at least one of the one or more packed beds in the cooling stage, wherein the pre-treated stream of air reduces an excessive temperature of the at least one of the one or more packed beds, and a heated stream of air exits via the one or more product lines of the at least one of the one or more packed beds in the cooling stage. Further, the method includes processing through the heat recovery unit, the plurality of gas streams coming from the one or more packed beds via the one or more product lines, and the pre-treated feed gas coming from the source via the one or more feed lines, wherein the heat recovery unit processes the plurality of gaseous transfers in a plurality of heat exchangers by a plurality of heat exchange mechanisms, to recover: (i) the target gas released from the exit of the packed bed in the heating stage, (ii) the target gas removed from the exit of the packed bed in the evacuation stage, (iii) the heated stream of air released from the packed bed in the cooling stage, (iv) the heated air from in the one or more heat exchanger, and (v) the pre-treated feed gas received from the source. The swing-adsorption mechanisms for the gas separation from the fixed bed comprising the one or more packed beds is one of (a) a Temperature Vaccum Concentration Swing Adsorption (TVCSA), (b) a Temperature Swing Adsorption (TSA), (c) a Vaccum Swing Adsorption (VSA), (d) a Concentration Swing Adsorption (CSA), (e) a Pressure Swing Adsorption (PSA), and combinations thereof. The plurality of lines facilitating the plurality of gaseous transfers is controlled by the plurality of valves such that the entry and the exit to the one of the one or more packed beds undergoing one stage of the swing adsorption mechanisms is not affected by the entry and the exit to the one of the one or more packed bed undergoing another stage of the swing adsorption mechanisms. The pre-treated feed gas is obtained by processing a flue gas coming from the source and directed to the at least one packed bed of the plurality of packed beds at the adsorption stage, and wherein the processing of the flue gas comprises removal of (i) one or more particulate matters, (ii) one or more oxides, and (iii) an excessive moisture when the adsorbent material is susceptible to the moisture. The one or more adsorbent material is at least one of (i) an active structured or an active unstructured material, and (ii) a particulate material facilitating higher surface area for contact between phases for at least (a) an effective chemical reaction, (b) an effective mass transfer, (c) an effective heat transfer, and (d) a combination thereof, and wherein the adsorbent material is made of at least one of (i) a physio chemically active material, (ii) an inert material, wherein the physio chemically active material is coated or impregnated with an inert or support material, and (c) a combination thereof. A portion of the target gas exiting the at least one of the one or more packed beds at the heating stage gets reheated in the heat recovery unit and is re-circulated to the at least one of the one or more packed beds undergoing the heating stage thereby preventing cross contamination from any other heat source, and wherein the portion of the target gas re-circulated is proportional to a temperature required to heat the at least one of the one or more packed beds in the heating stage. The one or more adsorbent material of the plurality of packed beds cyclically undergo the swing-adsorption mechanisms until a working capacity of the one or more adsorbent material drops below a pre-set threshold making the adsorbent unsuitable for further processing and is followed by replenishing the fixed bed with a fresh stock of the adsorbent material. A cycle time of each stage of the at least one swing-adsorption mechanisms is scheduled in a manner that each packed-bed of the fixed bed undergo at least one stage of the at least one swing-adsorption mechanisms.

In another aspect, a system for gas separation from the pre-treated feed gas is provided. A fixed bed comprising one or more packed beds capable of adsorbing, and releasably binding, a target gas from the pre-treated feed gas. Each packed bed cycles through at least one of plurality of stages of a swing-adsorption mechanism comprising an adsorption stage, a heating stage, an evacuation stage, and a cooling stage at each timestamp sequentially. Each packed bed has an entry and an exit for a plurality of lines comprising one or more feed lines and one or more product lines facilitating a plurality of gaseous transfers controlled by a plurality of valves. The heat recovery unit comprising (i) a plurality of heat exchangers and (ii) a mixer compartment, wherein the heat recovery unit processes a plurality of gas streams in the plurality of heat exchangers, by a plurality of heat exchange mechanisms, and wherein the plurality of gas streams coming from one or more feed lines and one or more products lines to the heat recovery unit exchanges heat, and wherein the one of the one or more gas streams at high temperature loses the heat to the one of the one or more gas streams at low temperature, and the one of the one or more gas streams at low temperature gains the heat from the one of the one or more gas streams at high temperature. The one or more heat exchangers receive the stream of target gas exited from the one of the one or more packed beds in the heating stage and gains heat from the heated stream of air exited from the one of the one or more packed beds in the cooling stage and carried to the one or more heat exchangers as a hot stream of target gas. The one or more heat exchangers receive the hot stream of target gas coming from one of the one or more heat exchanger further gains the heat from the pre-treated feed gas coming from the source at higher temperature to acquire a temperature suitable for the heating stage. The one of the one or more heat exchangers receive the pre-treated feed gas coming from one of the one or more heat exchanger interacts with the ambient air before entering the one of the one or more packed beds in the adsorption stage and cools down to a temperature suitable for the adsorption stage. The mixer compartment facilitate a mixing of (a) the stream of target gas exited from the one of the one or more packed beds in the evacuation stage, and (b) the hot stream of target gas exited from the one of the one or more packed beds in the heating stage to attain and equilibrium temperature and directs a mixed stream of equilibrium temperature to the one of the one or more heat exchangers.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a structural components of a fixed bed utilized for gas separation, according to some embodiments of the present disclosure.
FIGS. 2A, 2B, 2C and 2D illustrate a plurality of stages of a swing adsorption-mechanism, according to some embodiments of the present disclosure.
FIGS. 3A and 3B depict flow diagrams of an illustrative method for gas separation, according to some embodiments of the present disclosure.
FIG. 4 illustrates a topography of a heat recovery unit, according to some embodiments of the present disclosure.
FIG. 5 illustrates a process of separation of carbon dioxide from a feed gas/ flue gas using a fixed bed with a plurality of packed beds, according to some embodiments of the present disclosure.
FIG. 6 illustrates heat exchange mechanism in the heat recovery unit with respect to separation of carbon dioxide from the feed/ flue gas.
FIG. 7 illustrates stage-wise heat requirement of swing-adsorption mechanism.
FIGS. 8A, 8B, 8C and 8D illustrates heat exchange occurring at each component of the heat recovery unit.

### DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The present disclosure provides a method of gas separation through a fixed bed. The method involves removing one or more target gases from a flue gas or an equivalent gas streams from which one or more target gases are to be removed before releasing these flue gases to the environment. One such target gas is carbon dioxide. It is necessary to treat a tail pipe gas comprising a substantive amount of carbon dioxide that comes from an internal combustion engine of a heavy-duty truck, ships, rail engines, exhausts of power generators, or the like. The present disclosure provides a mobile carbon capture process for treating the tail pipe gas by efficiently removing the carbon dioxide thereby releasing a lean gas which is considered safe to the environment.

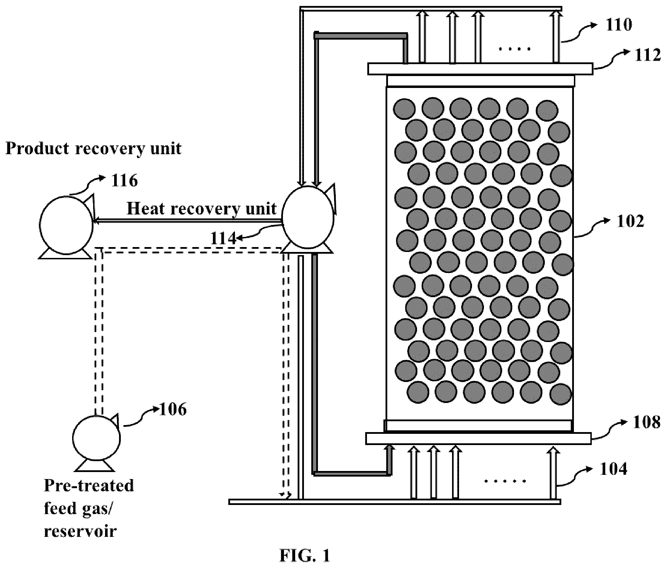

FIG. 1 illustrates a structural components of a fixed bed utilized for gas separation, according to some embodiments of the present disclosure.

As illustrated in FIG. 1, the fixed bed 102 is utilized for gas separation by the adsorption mechanism. The adsorption dynamics of the fixed bed 102 is crucial as it facilitates continuous adsorption of a target gas to be separated from one or more feed gas (i.e. a flue gas or other exhaust gases). The fixed bed 102 receives a plurality of supplies through a plurality of feed lines 104 entering to the fixed bed 102 from a feed end 108. Normally, only one of the feedline valves will be open while valves in others remain closed. The plurality of supplies includes one or more feed gas stream coming from a reservoir 106, one or more gas streams for temperature conditioning and one or more gas streams for pressure conditioning. The one or more feed gas stream coming from the reservoir 106 is a treated prior to entering the fixed bed 102 in a heat recovery unit 114. Similarly, the fixed bed 102 facilitates evacuation of a plurality of gas streams through a plurality of product lines 110 exiting the fixed bed 102 from a product end 112. The plurality of gas streams exiting the fixed bed 102 includes the lean gas, the target gas, one or more gas streams for temperature conditioning regulation. Typically, only one of the product valves will be opened at any point of time connecting the outgoing gas from the fixed bed to the corresponding product line. The one or more gas streams for temperature conditioning and pressure regulation entering as well as exiting the fixed bed 102 are controlled by the heat recovery unit 114. The plurality of feed lines and the plurality of product lines facilitates the plurality of gaseous transfers. The plurality of gaseous transfers is controlled by a plurality of valves such that the entry and the exit to the one of the one or more packed beds undergoing one stage of the swing adsorption mechanisms is not affected by the entry and the exit to the one of the one or more packed bed undergoing another stage of the swing adsorption mechanisms. The heat recovery unit 114 facilitates a plurality of heat exchange mechanisms to balance heat requirement of the adsorption through the fixed bed 102. The heat recovery unit 114 comprises a plurality of heat exchangers that processes the plurality of gaseous transfers by the plurality of heat exchange mechanisms. The target gas separated from the feed gas is processed in the heat recovery unit 114 and is collected in a product reservoir unit 116.

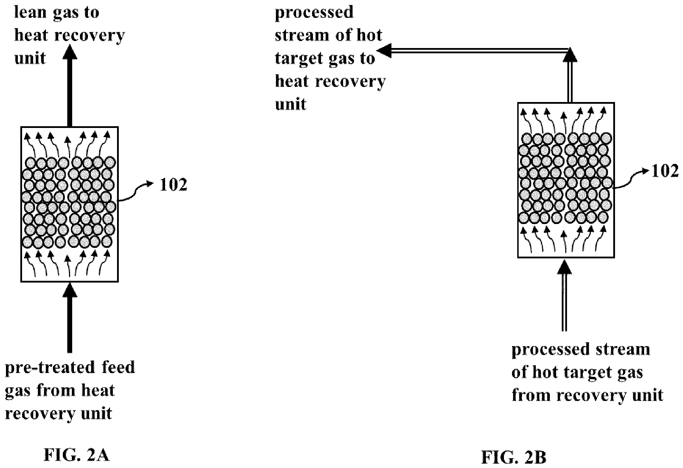

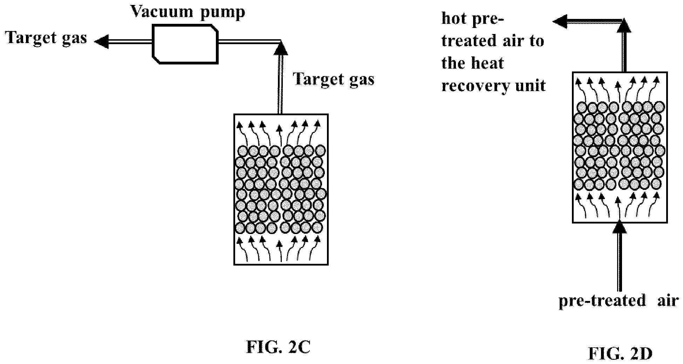

FIGS. 2A, 2B, 2C and 2D illustrate a plurality of stages of a swing adsorption-mechanism, according to some embodiments of the present disclosure.

As illustrated in FIGS. 2A, 2B, 2C and 2D, the gas separation from the fixed bed 102 utilizes a plurality of swing-adsorption mechanisms that is executed in one or more packed beds of an adsorbent material in the fixed bed. The plurality of swing-adsorption mechanism utilized for gas separation includes (a) a Temperature Vaccum Concentration Swing Adsorption (TVCSA), (b) a Temperature Swing Adsorption (TSA), (c) a Vaccum Swing Adsorption (VSA), (d) a Concentration Swing Adsorption (CSA), (e) a Pressure Swing Adsorption (PSA), or a combinations thereof. The plurality of swing-adsorption mechanisms comprises an adsorption stage, a heating stage, an evacuation stage, and a cooling stage in a sequential manner. The sequential occurrence of these stages is executed in the one or more packed beds. The one or more packed beds of the fixed bed comprises one or more adsorbent material, one or more inert material, and combinations thereof. The one or more adsorbent material of the one or more packed bed cyclically undergo the swing-adsorption mechanisms until a working capacity of the one or more adsorbent material drops below a pre-set threshold making the adsorbent unsuitable for further processing and is followed by replenishing the fixed bed with a fresh stock of the adsorbent material. When the swing-adsorption mechanism utilizes the one or more packed beds then each packed bed of the one or more packed beds sequentially cycles through at least one of the plurality of stages of at least one swing-adsorption mechanisms at each timestamp. A cycle time of each stage of the at least one swing-adsorption mechanisms is scheduled in a manner that each packed-bed of the fixed bed undergo at least one stage of the at least one swing-adsorption mechanisms. For an efficient scheduling process with no idle times, it is essential to ensure that the step time for each stage or step (or a combination of smaller tasks) is equal in a cycle. Achieving this balance will lead to enhanced productivity by minimizing delays and ensuring a continuous process without stoppages. Referring now to FIG. 2A, the packed bed of adsorbent material of the fixed bed 102 in the adsorption stage adsorbs the target gas from the pre-treated feed gas and releases the lean gas through an associated exit. Referring to FIG. 2B, a processed stream of hot target gas is injected from the associated entry of the packed bed of the adsorbent material of the fixed bed 102 in the heating stage. The processed stream of hot target gas raises temperature the packed bed of adsorbent material holding the one or more target gas adsorbed at the adsorption stage and exits the packed bed of adsorbent material of the fixed bed 102 through the associated exit. Referring to FIG. 2C, the adsorbed target gas is removed from the exit of the packed bed of adsorbent material of the fixed bed 102 in the evacuation stage by depressurization, a term used here to broadly mean lowering the pressure in the column from its initial pressure to reduced pressures including lower than atmospheric pressure (vacuum). Referring to FIG. 2D, a pre-treated stream of air, typically at a temperature near the atmospheric temperature, is injected to packed bed of the adsorbent material of the fixed column 102 in the cooling stage. The pre-treated stream of air reduces an excessive temperature of the packed bed, and a heated stream of air exits through the associated exit of the packed bed of adsorbent material in the cooling stage.

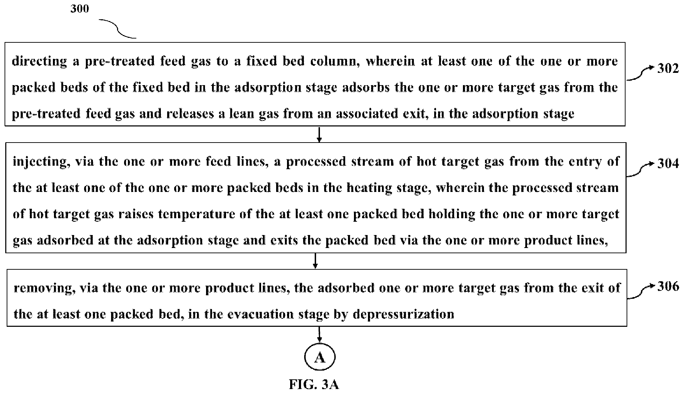

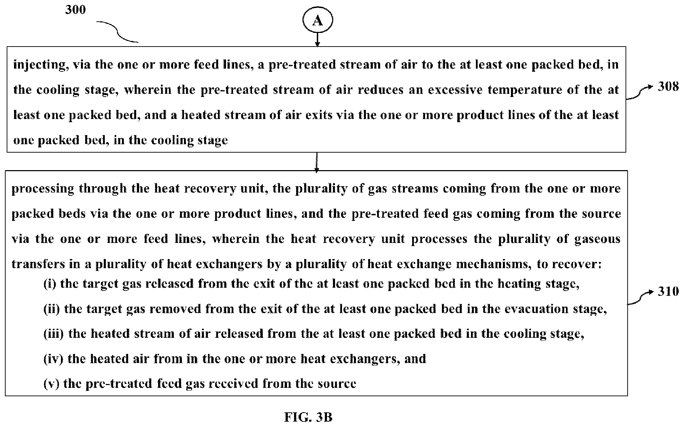

FIGS. 3A and 3B depict flow diagrams of an illustrative method 300 for gas separation, according to some embodiments of the present disclosure.

The steps of method 300 of the present disclosure will now be explained with reference to the components or blocks or functioning of the fixed bed as depicted in FIG. 1 through FIG. 8D. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 302 of the method 300, a pre-treated feed gas is directed to a fixed bed. The fixed bed comprises of one or more packed bed to execute each stage of the swing-adsorption mechanism. The at least one of the one or more packed beds of the fixed bed in the adsorption stage adsorbs the one or more target gas from the pre-treated feed gas and releases the lean gas from an associated exit, in the adsorption stage. According to an embodiment of the present disclosure, a pre-treated feed gas is directed to a fixed bed. The fixed bed comprises the one or more packed beds capable of adsorbing, and releasably binding, one or more target gas from the pre-treated feed gas. The target gas is the one which has is to be recovered from the flue gas/ exhaust gas before releasing the flue gas/ exhaust gas to the environment. A feed gas coming from a source involves an internal combustion engine of a heavy-duty truck, ships, rail engines, exhausts of power generators, or the like, or one or more equipments involving combustion of fossil fuels from one or more fossil fuel-based combustion engines and turbines. The feed gas is treated in the heat recovery unit prior to entering the fixed bed. The pre-treated feed gas is obtained by treating a feed gas coming from the source to remove (i) one or more particulate matters, (ii) one or more oxides, and (iii) an excessive moisture when one or more adsorbent material of the fixed bed is susceptible to the moisture. The one or more packed bed of the fixed bed sequentially cycles through at least one of a plurality of stages of at least one swing-adsorption mechanism comprising an adsorption stage, a heating stage, an evacuation stage, and a cooling stage at each timestamp. Each packed bed of the one or more packed beds has an entry or an exit for a plurality of lines comprising one or more feed lines and one or more product lines facilitating a plurality of gaseous transfers controlled by a plurality of valves. The pre-treated feed coming from the source is directed to the fixed bed through the heat recovery unit. The heat recovery unit facilitates a plurality of heat exchange mechanisms to sustain an energy requirement of the gas separation.

At step 304 of the method 300, the processed stream of hot target gas from the entry of the at least one of the one or more packed beds in the heating stage is injected via the one or more feed lines. The processed stream of hot target gas raises temperature of the at least one packed bed holding the one or more target gas adsorbed at the adsorption stage and exits the packed bed via the one or more product lines. The processed stream of hot target gas is sent to the packed bed undergoing heating stage with a purpose of preventing cross-contamination. When the target gas entering the packed bed in the heating stage and the target gas already adsorbed in the packed bed during adsorption stage is same, chances of contamination reduces, purity of the target gas is assured. Therefore, a portion of the target gas exiting the at least one of the one or more packed beds at the heating stage gets reheated in the heat recovery unit and is re-circulated to the at least one of the one or more packed beds undergoing the heating stage thereby preventing cross contamination from any other heat source. The portion of the target gas re-circulated is typically inversely proportional to the time available (step time)to heat the at least one of the one or more packed beds in the heating stage.

At step 306 of the method 300, the adsorbed target gas from an exit of the at least one of the one or more packed beds is removed via the one or more product lines, in the evacuation stage by depressurization. Vaccum is applied to the fixed bed undergoing evacuation stage and so that maximum recovery of the target gas is achieved.

At step 308 of the method 300, a pre-treated stream of air is injected, via the one or more feed lines, to the at least one of the one or more packed beds in the cooling stage. The pre-treated stream of air reduces an excessive temperature of the at least one of the one or more packed beds, and a heated stream of air exits via the one or more product lines of the at least one of the one or more packed beds in the cooling stage.

At step 310 of the method 300, the plurality of gas streams coming from the one or more packed beds via the one or more product lines, and the pre-treated feed gas coming from the source via the one or more feed lines are processed in the heat recovery unit. The heat recovery unit processes the plurality of gaseous transfers in a plurality of heat exchangers by a plurality of heat exchange mechanisms, to recover the below gas streams:
(i) the target gas released from the exit of the packed bed in the heating stage. The target gas released from the packed bed in the heating stage gets mixed with the target gas coming from the packed bed under evacuation stage and attains a higher temperature followed by processing some portion of this mixed stream in one or more heat exchanger to gain heat. The target gas removed from the exit of the packed bed in the evacuation stage and the target gas coming from heating step are pre-processed in a moisture removal unit, if necessary, to eliminate excess moisture before the mixing step.
(ii) the target gas removed from the exit of the packed bed in the evacuation stage. The target gas removed from the exit of the packed bed in the evacuation stage is mixed with the target gas coming from heating step and reached at higher temperature followed by processing some portion of mixed stream in one or more heat exchanger to gain heat.
(iii) the heated stream of air released from the packed bed in the cooling stage gets processed through one or more heat exchangers to cool down and transfer heat to the target gas.
(iv) the heated air from one or more heat exchangers, gets processed via the one or more heat exchangers to cool down the pretreated feed gas and (v) the pre-treated feed gas received from the source is processed through the one or more heat exchangers to cool down to the temperature desired for adsorption stage and provide heat to the target gas.

According to an embodiment of the present disclosure, a device for gas separation is provided. The device comprises (a) a fixed bed comprising one or more packed beds capable of adsorbing, and releasably binding, a target gas from the pre-treated feed gas. Each packed bed cycles through at least one of plurality of stages of a swing-adsorption mechanism comprising an adsorption stage, a heating stage, an evacuation stage, and a cooling stage at each timestamp sequentially. Each packed bed has an entry and an exit for a plurality of lines comprising one or more feed lines and one or more product lines facilitating a plurality of gaseous transfers controlled by a plurality of valves, and (b) the heat recovery unit comprising (i) a plurality of heat exchangers (ii) a mixer compartment and (iii) a moisture removal unit wherein the heat recovery unit processes a plurality of gas streams in the plurality of heat exchangers, by a plurality of heat exchange mechanisms. The plurality of gas streams coming from one or more feed lines and one or more products lines to the heat recovery unit exchanges heat. The one of the one or more gas streams at high temperature loses the heat to the one of the one or more gas streams at low temperature, and the one of the one or more gas streams at low temperature gains the heat from the one of the one or more gas streams at high temperature.

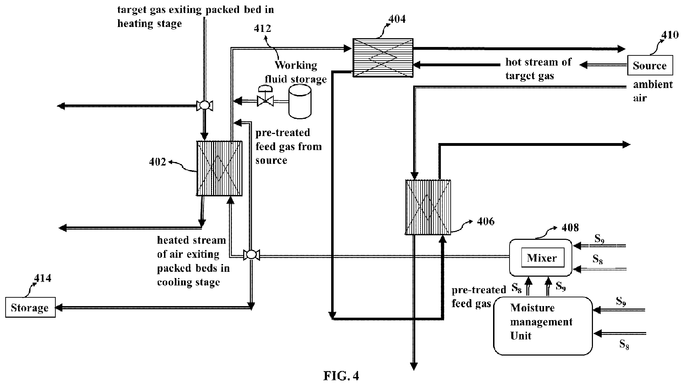

FIG. 4 illustrates an exemplary heat recovery unit, according to some embodiments of the present disclosure.

As illustrated in FIG. 4, the exemplary heat recovery unit comprises a first heat exchanger 402, a second heat exchanger 404, a third heat exchanger 406, and a mixer compartment 408. The heat recovery unit processes a plurality of gas streams in the first heat exchanger 402, the second heat exchanger 404 and the third heat exchanger 406 by a plurality of heat exchange mechanisms. The plurality of gas streams coming from one or more feed lines and one or more products lines to the heat recovery unit exchanges heat. The one of the one or more gas streams at high temperature loses the heat to the one of the one or more gas streams at low temperature, and the one of the one or more gas streams at low temperature gains the heat from the one of the one or more gas streams at high temperature. The first heat exchanger 402 receives the stream of target gas exited from the one of the one or more packed beds in the heating stage and gains heat from the heated stream of air exited from the one of the one or more packed beds in the cooling stage and carried to the second heat exchanger as a hot stream of target gas. The second heat exchanger 404 receive the hot stream of target gas coming from the first heat exchanger and further gains the heat from the pre-treated feed gas coming from the source 410 at a higher temperature to acquire a temperature suitable for the heating stage. This exchanger may be a direct contact type, using either solid particulates or a structured packing material that undergoes heating and cooling cycles. This design allows the exchanger to store excess heat available/generated during certain phases of the cycle and release it when heating is needed, ensuring efficient thermal management. The third heat exchanger 406 receive the pre-treated feed gas coming from the second heat exchanger interacts with the ambient air before entering the one of the one or more packed beds in the adsorption stage and cools down to a temperature suitable for the adsorption stage. The mixer compartment 410 facilitate a mixing of (a) the stream of target gas exited from the one of the one or more packed beds in the evacuation stage, and (b) the hot stream of target gas exited from the one of the one or more packed beds in the heating stage to attain and equilibrium temperature and directs a mixed stream of equilibrium temperature to the first heat exchangers. The heat recovery unit comprises of a working fluid storage unit 412. The working fluid storage unit 412 functions to supply the requisite makeup mass of the working fluid, particularly during the initial system startup or whenever a constant flow of the working fluid is essential for the heating of the packed bed. The working fluid storage unit 412 supplies the makeup mass of the working fluid to the one or more gas streams coming from the second heat exchanger 402 and such mixed gas stream enters the third heat exchanger 404. The stream of target gas coming out from the mixer 408 bifurcates into two streams based on requirement of the one or more heat exchanger whereas one of the two streams goes to the one or more heat exchanger and the other stream goes to a storage 414.

In an embodiment of the present disclosure, the solid adsorbents of the packed beds undergo this cyclical process until their working capacity drops below a threshold and their usage becomes infeasible after which the beds would have to be refilled with fresh stock of adsorbents. One of the limiting factors for adsorbent materials used in state-of-the-art designs is their response to moisture. Affinity to moisture could reduce the adsorption capacity of the material as it reduces the active sites available for the target component to get adsorbed. Use of such adsorbents would require drying of the exhaust gases before being exposed to the gas separation beds. The disclosed method employs both moisture tolerant and intolerant material for the gas adsorption. Some of the materials that can be used with the disclosed methods as adsorbents include alkali metal carbonates. One of the exemplary adsorbent is potassium carbonate which serves as a resilient moisture-tolerant adsorbent for carbon capture and offers reliable performance in the presence of moisture. The CALF-20, a new type of metal-organic framework, also exhibits good CO₂ adsorption selectivity, even in humid conditions, making it a promising choice for carbon capture process in presence of moisture in feed. Conversely, zeolites, while exceptional in their CO₂ adsorption properties, are moisture-intolerant adsorbents and are suitable for carbon capture in scenarios where moisture removal from the gas stream can be effectively managed prior to the process. The choice among these materials depends on the specific environmental conditions and requirements of the process and the carbon capture application.

In an embodiment of the present disclosure, the moisture removal unit manage the moisture in the gaseous stream based on the adsorbent used, for adsorbents like K₂CO₃ require moisture for effective CO₂ adsorption, while adsorbents like zeolite need moisture to be removed before CO₂ can be adsorbed. Introducing moist, cold air during the cooling stage can help reload moisture, thereby enhancing adsorption with adsorbents like K₂CO₃. Conversely, sending CO₂ with little or no moisture during the heating stage can aid the desorption process.

In an embodiment of the present disclosure, the heat requirement of the swing-adsorption mechanism utilize the hot stream of the target gas for heating purposes. Hence, use of external heating source such as steam is eliminated. This leads to compact design of the system as there is no additional requirement of an external heating source thus reducing the overall footprint of the design and making it more compact and desirable for application to mobile capture.

**In** an embodiment of the present disclosure, a direct contact heat exchange with heating fluid (i.e. plurality of gas streams) increases the heat transfer rate. This reduces the heating time, required to heat up the adsorbent material leading to a lower cycle time for the entire process and enhances productivity. Since the target gas itself is used as a heating medium there is no contamination of the target gas, which in turn increases the purity of the target gas.

**In** an embodiment of the present disclosure, thermal integration between the plurality of streams such as between the feed gas and the heating medium and between the exhaust from the cooling stage and the heating medium reduces the heat load of the swing-adsorption mechanism that greatly reduces the operating cost of the entire process.

**In** an embodiment of the present disclosure, the adsorbent material used in the swing-adsorption mechanism is preferably moisture tolerant in nature. This reduces the complexity of the process compared to those processes involving moisture intolerant adsorbents since no extra step is required for moisture removal before processing. Moisture in the target gas stream is removed after the target gas is separated. The main advantage of the method disclosed in the present disclosure is that the method is capable of processing even a low flow rate of gas stream. This makes the overall device more compact and easier to operate with low energy requirements. The desorption process enhanced by utilizing a thermal swing along with a vacuum swing in TVSA mechanism works in conjunction with each other and enhances the overall efficiency of the adsorption process.

In an embodiment of the present disclosure, cooling stage involves direct contact of the ambient air with the adsorbent material that leads to a considerable increase in the level of cooling achieved compared to an indirect process. Since the amount of target gas present in the ambient air is negligible compared to other gaseous components, the adsorption of the target gas during the cooling stage have negligible effect on the next cycle. This helps achieve near complete regeneration of the adsorbents both in terms of the bed temperature as well as target gas concentration on the solids. The process uses swings in terms of temperature, pressure and concentration in an effective manner. Furthermore, the cooling stage nearly returns the bed to about the same state the bed started before the adsorption stage. It makes the process stabilize quickly in a few cycles.

According to an embodiment of the present invention, one or more target gases are separated from biogas using the TVCSA swing-adsorption mechanism. In the treatment of biological wastes, such as organic matter from agricultural or municipal sources, anaerobic digestion is commonly employed to produce the biogas. The biogas is essentially composed of methane (CH₄) and CO₂. The presence of CO₂ reduces energy content of the biogas, making its removal essential for efficient utilization. The fixed-bed columns with swing-adsorption mechanisms can effectively capture CO₂, thereby enriching the methane content in the gas products.

The biogas generated from anaerobic digestion typically contains 50-70% methane and 30-50% carbon dioxide, along with trace gases. The fixed-bed adsorption column is filled with a suitable adsorbent material, which has a high affinity for CO₂. The design allows for continuous flow of the biogas through the bed. As the biogas passes through the fixed bed, CO₂ molecules are adsorbed onto the surface of the adsorbent, while methane, due to its lower adsorption affinity, continues to flow through the column. After a certain period, the adsorbent becomes saturated with CO₂. Regeneration can be achieved through temperature swing adsorption (TSA) or pressure swing adsorption (PSA) or any other swing mechanism, where heat or pressure is applied to release the captured CO₂, allowing for the reuse of the absorbent. The process may involve the partial combustion of the feed gas to generate the necessary heat for maintaining optimal operating temperatures in the column, enhancing the adsorption efficiency and potentially aiding in the regeneration of the adsorbent. By removing CO₂, the methane content in the biogas can be significantly enriched, improving its calorific value and making it more suitable for energy applications. This process not only enhances methane recovery but also contributes to carbon capture efforts, reducing the overall greenhouse gas emissions associated with waste treatment. Utilizing the heat generated from the partial combustion of feed gas can lower operational costs and improve the overall energy efficiency of the system.

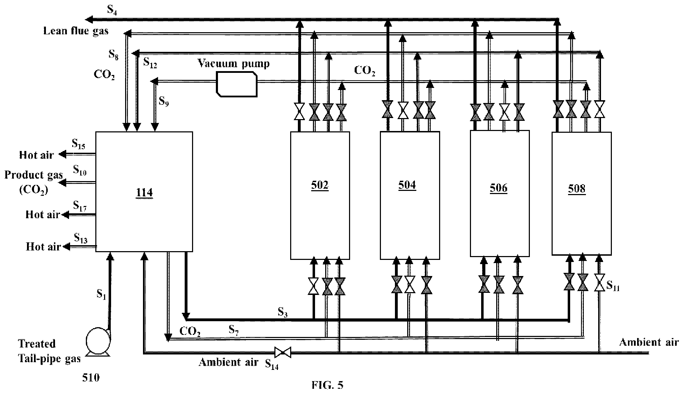

USE CASE: An example scenario of gas separation involving the TVCSA swing-adsorption mechanism carried in the fixed bed comprising at least four packed beds for separating carbon dioxide from the flue gas is presented. As illustrated in FIG. 5, the four packed beds of adsorbents, each one cycling through four stages viz adsorption, heating, evacuation and cooling in a sequential manner. It is envisaged that all the above-mentioned stages are accomplished in equal times. Whereas the time taken by the evacuation stage and the pressurization stage combined, equal to other two stages. This results in faster switching from one stage to the other with a minimal lag in between ensuring optimal utilization of the bed thus improving the productivity of the overall TVCSA swing-adsorption mechanism. The packed bed 502 undergoing the adsorption stage receives a pre-treated feed gas (S₃) coming from the engine exhaust as a source of a flue gas from which carbon dioxide (CO₂) is to be separated. The pre-treatment of the feed gas involve removal of particulate material, reduction of oxides of nitrogen (NOx), removal of excess moisture in case of hydrophilic adsorbents, etc. The CO₂ from the pre-treated feed gas is removed when it passes through the bed 502 producing a lean flue gas (S₄) with minimal CO₂. This stream is safely let out to the environment as it contains negligible or low CO₂ content. The bed 504 undergoing heating stage has already passed through the adsorption stage and has the already adsorbed CO₂. The bed 504 receives a hot stream of CO₂ gas (S₇) at about 200-300 C. The heat required to heat up the hot stream of CO₂ to the desired temperature range is received from the pre-treated feed gas (S₁) coming from the engine exhaust source 510. Heating is carried out through a set of indirect or direct type heat exchangers in heat recovery unit 114. At the end of the heating stage, the bed 504 along with the adsorbed CO₂ gets heated to the desired temperature. During the heating stage, a part of CO₂ might be desorbed, but most of it would remain adsorbed as the bed 504 is exposed to the high concentration of CO₂ in this stage, thus limiting the transfer of the adsorbed CO₂ from the bed 504 to the hot stream of CO₂. This reduces the contamination of the product in the later stages. In the next evacuation stage, vacuum is applied, typically between 0.01 and 0.05 MPa to remove most of the remaining adsorbed CO₂ from the bed 506 as a CO₂ gas stream (S₉). At the end of this stage, the bed 506 shall still be at a high temperature and is not yet ready for it to go to adsorption. Further cooling of the bed 506 is required to bring it to the optimal temperature range. In the last, and the final stage, the bed 508 undergoing the cooling stage receives atmospheric air at around 25-35 C to effectively bring down the temperature of the bed 508 by extracting the heat from the bed 508 and making the bed 508 ready for the next process cycle. During this process, the atmospheric air (as a pre-treated stream of air) gains heat from the bed 508 and gets heated up. A heated stream of air coming out from the cooling stage may be used to pre-heat the CO₂ stream that is going back to the heating stage. Alternately, this heated air may be let out to the environment or used in the combustion engine to improve its thermal efficiency. The pre-treated feed gas (S₃) coming from the engine exhaust as a source of a flue gas undergoes a pre-treatment before entering the fixed bed for target gas separation. In the pre-treatment, one or more particulate matter, one or more oxides of nitrogen (NOx), one or more oxides of sulphur (Sox) and moisture (if required) are removed from the feed gas. This pre-treated feed gas (S3), passes through the heat recovery unit 114 comprising three heat exchangers, a first heat exchanger, a second heat exchanger and a third heat exchanger. The pre-treated feed gas passes through the second heat exchanger which is an indirect or direct (operated cyclically) heat exchanger and facilitate a heat exchange between CO₂ stream (S6) coming from the first heat exchanger and pre-treated feed gas. Further this pre-treated feed gas having passed through the second heat exchanger passes through a third heat exchanger which is preferably an indirect heat exchanger. In the third heat exchanger, an indirect heat exchange occurs between ambient air and the pre-treated feed gas. This reduces the temperature of the pre-treated feed gas to a desired temperature range for the adsorption step. The pre-treated feed gas with desired low temperature passes to the packed bed 502 undergoing the adsorption stage where CO₂ is absorbed by the packed bed 502.

### COMPARATIVE ANALYSIS OF THE EFFICIENCY

A simulation study has been performed using the method disclosed in the present invention. A comparative study is performed to compare configuration and performance parameters such as recovery, productivity and specific energy consumption of the disclosed method (TVCSA) with the current state-of-the-art. (Reference: Raganati, Federica, Francesco Miccio, and Paola Ammendola. "Adsorption of carbon dioxide for post-combustion capture: a review." energy & fuels 35.16 (2021): 12845-12868.) The reference article presented a comparative study of various gas separation mechanism utilizing swing-adsorption in the fixed bed. The disclosed method utilizes potassium carbonate (K₂CO₃)as an adsorbent material for simulation. Other process and design parameters are given in Table-1 and material properties are given in the Table-2:

**Table-1**

| **Process/design parameter** | **Value** |
|---|---|
| Column length, m | 1.5 |
| Inner radius, m | 0.5 |
| Outer radius, m | 0.52 |
| Column void | 0.37 |
| Particle void | 0.35 |
| Particle diameter, m | 0.002 |
| Tortuosity | 3 |
| Pump efficiency | 72% |
| Blower efficiency | 72% |

**Table-2**

| **Material properties** | **Value** | **Units** |
|---|---|---|
| Wall Density | 7800 | kg/m3 |
| Heat capacity (Wall) | 502 | J/kg K |
| Viscosity | 1.72 * 10**-5 | Pa-s |
| Diffusivity | 1.60 * 10**-5 | m2/sec |
| Adiabatic constant | 1.4 | - |
| Conductivity of gas | 0.0256 | W/m-K |

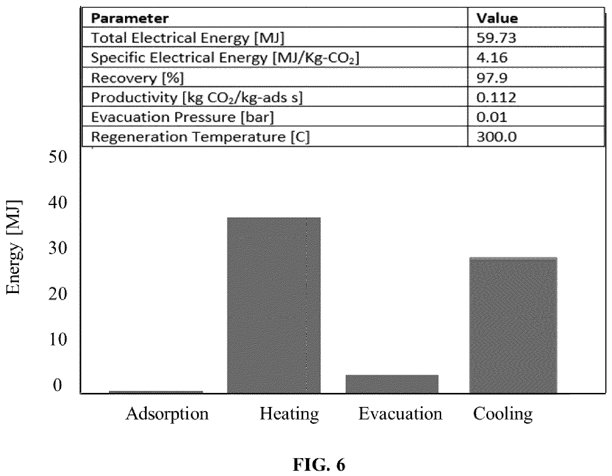

The TVCSA mechanism comprises an adsorption stage, a heating stage, an evacuation stage and a cooling stage. The energy requirement of each stage of the TVCSA mechanism in shown in FIG. 6 wherein bars represents the electric energy required for pumping. As depicted through bars, the energy requirement is high in the heating stage compared to the cooling stage due to the change in the gas which is being processed by the pump. The operating condition for simulation is presented in Table-3 and the comparison of the results with the state-of-art-methods is presented in Table-4.

**Table-3**

| Operation | Cycle time (sec) | Mass flow rate (kg/sec) |
|---|---|---|
| Adsorption | 600 | 0.12 |
| Heating | 600 | 0.5 |
| Evacuation + pressurization | 600 | NA |
| Cooling | 600 | 0.5 |

**Table 4**

| | Purity (vol %) | Recovery [%] | Productivity (g/kg-h) | Energy [MJ/kg CO2] |
|---|---|---|---|---|
| Ntiamoah et al. from Raganati et al 2021 | >91 | 55.5-83.6 | 24-41 | 3.40-4.5 |
| Webley et al from Raganati et al 2021 | 95.0 | 81.0 | 58 | 3.23 |
| Raganati et al 2021 | 97.3 | 97.7 | 72 | 3.22 |
| Disclosed method | 99 | 97.84 | 105 | 3.18 |

As depicted in Table-4, the first comparison is with a TSA method (direct: hot product gas purge) (reference: Ntiamoah et al.) that uses NaUSY zeolite as the sorbent material, in which recovered CO₂ is first heated (at 250 °C) and used as purging gas obtaining a CO₂ purity larger than 91% and CO₂ recovery of 83.6% with a thermal energy consumption of 4.5 MJ kg-1 of CO₂. In the second comparison, a VTSA (Webley et al.) mechanism utilizes a non-conventional hybrid microwave-assisted VTSA using 13Xzeolite. A brief exposure to microwave radiation found to improve the rates of CO₂ and water desorption at the investigated vacuum levels, thus suggesting that overall energy penalty may be reduced as a result of the positive effect yielded by the microwave application. In the third comparison, an indirect TSA method (indirect + N2 purge) (Clausse et al.) is proposed with an internal heat exchanger, using 13X zeolite, obtaining a CO₂ purity larger than 95%, a CO₂ recovery level of 81%, and a specific energy consumption of 3.23 GJ/tonne of CO₂. However, it has been observed that the fixed bed reactors suffer from poor heat transfer coefficients, which also applies to tube-to-particle heat transfer coefficients, and, therefore, the indirect heating mode suffered less recovery. Based on comparisons, is it clearly evident that the disclosed method outperformed in terms of recovering the target gas from the pre-treated feed gas as 97.84% target gas is recovered with 99% purity. It is worth noting that the disclosed process achieves much higher productivity than the known methods.

### PERFORMANCE OF HEAT RECOVERY UNIT

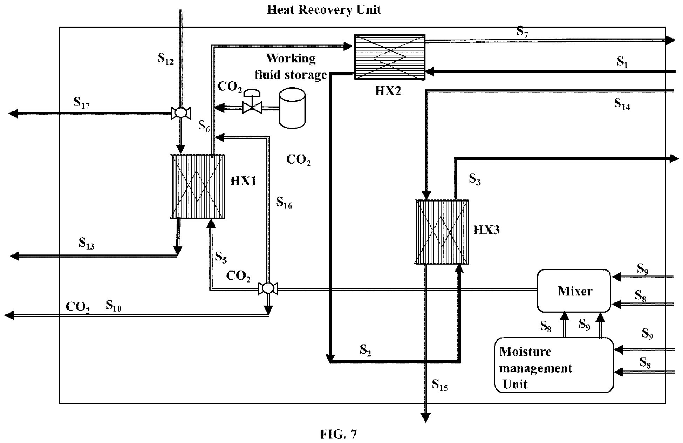

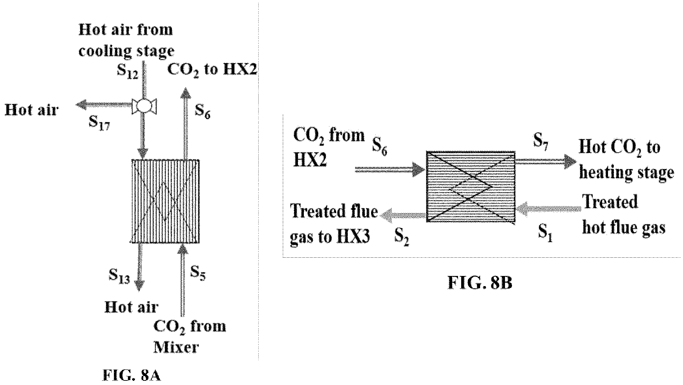

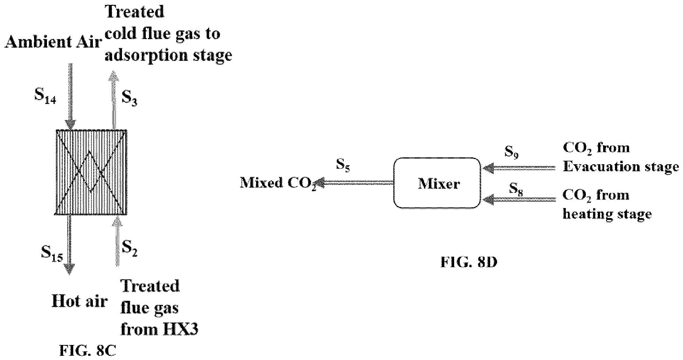

FIG. 7 illustrates individual processing of the plurality of gas streams in the heat recovery unit at the first heat exchanger (HX1) 402, the second heat exchanger (HX2) 404, the third heat exchanger (HX3) 406, the mixer compartment and the moisture management unit. At the HX1 402, the CO₂ coming from the mixer compartment 408 as shown in FIG. 8D and the ambient air coming from the cooling stage exchanges heat in an indirect contact type plate heat exchanger (shown in FIG. 8A). The CO₂ in the mixer compartment comes via moisture management unit wherein a treatment is given to the CO₂ with respect to removing moisture before entering the mixer compartment. The heat balance for this heat exchanger is shown below in Table-5. The first heat exchanger consumes 66.89 KW of electricity.

In the second heat exchanger (HX2) 404, the target gas temperature increases, while the air coming from the cooling stage cools down. This air further utilized in the downstream process. The hot target gas (working fluid(CO₂)) after this exchanger goes through another heat exchange with the pre-treated feed gas coming from the source engine as shown in FIG. 8B.. The pre-treated feed has gas cools down and hot target gas (working fluid (CO₂) gets heated. This hot CO₂ used for heating the bed in heating stage.

**Table-5**

| HX1 | CO₂ pre-heating from the air coming from cooling stage | | | | | | |
|---|---|---|---|---|---|---|---|
| CO₂ PreHeater | Component | Total Mass In [kg] | Circulation Rate (m) [kg/min] | Step Time [min] | Cp [J/kg-C] | Tin °C | Tout °C |
| | Recirculated CO₂ | 300.00 | 30.00 | 10.00 | 906 | 90.0 | 237.7 |
| | Heated Air | 296.00 | 29.60 | 10.00 | 1043 | 250.0 | 120.0 |

Details of the second heat exchanger is shown in Table-6.

**Table-6**

| HX2 | Treated tail pipe gas heat exchange with CO₂ from preheater | | | | | | |
|---|---|---|---|---|---|---|---|
| CO₂ Heater | Component | Total Mass In [kg] | Circulation Rate (m) [kg/min] | Step Time [min] | Cp [J/kg-C] | Tᵢₙ °C | Tₒᵤₜ °C |
| | Recirculated CO₂ | 300.00 | 30.00 | 10.00 | 1015 | 237.7 | 280.0 |
| | Tailpipe Exhaust | 85.70 | 8.57 | 10.00 | 1123 | 400.0 | 266.0 |

The pre-treated feed gas after processing in the second heat exchanger 404 enters the third heat exchanger (HX3) 406 to exchange heat with the ambient air and cools down as shown in FIG. 8C. The ambient gas gets heated up and tailpipe gas cools down , this tail pipe gas sent to the adsorption bed for further processing. The details of this exchanger are presented in Table-7.

**Table-7**

| HX3 | Treated tail pipe gas heat exchange after HX2 with air | | | | | | |
|---|---|---|---|---|---|---|---|
| Tailpipe Exhaust Cooler | Component | Total Mass In [kg] | Circulation Rate (m) [kg/min] | Step Time | Cp [J/kg-C] | Tin °C | Tout °C |
| | Ambient Air | 150.00 | 15.00 | 10.00 | 1014 | 25.0 | 161.3 |
| | Tailpipe Exhaust | 85.70 | 8.57 | 10.00 | 1070 | 266.0 | 40.0 |

The heat recovery unit within the swing-adsorption mechanism effectively utilizes the hot stream of the target gas for heating purposes, eliminating the need for external heating sources like steam. This results in a more compact system design with a reduced overall footprint, making it suitable for mobile capture applications. The direct contact heat exchange with multiple gas streams enhances the heat transfer rate, reducing the heating time for the adsorbent material and leading to a shorter cycle time, thereby improving overall productivity. Using the target gas as the heating medium prevents contamination and maintains high gas purity. Additionally, thermal integration between various streams, such as the feed gas and the heating medium, as well as between the exhaust from the cooling stage and the heating medium, significantly reduces the heat load on the swing-adsorption mechanism. This integration substantially lowers the operating costs of the entire process, making the system not only more efficient but also economically advantageous.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein addresses unresolved problem of efficiently executing gas separation from gaseous mixture from exhaust sources. The heat requirement of the swing-adsorption mechanism is managed by the heat recovery unit by balancing the heat generated during and heat consumed during the gas separation process thereby eliminating the requirement of any external heating source thus making the gas separation device compact and handy. **In** some embodiments, such as the biogas enrichment discussed earlier, a part of the processed or unprocessed feed can be combusted to generate required heat energy. The present disclosure utilizes a portion of target gas in balancing the heating requirements thus preventing cross-contamination with other gases. The direct contact heat exchange increases the heat transfer rate thereby reducing the heating or cooling time required to heat up or cool down the adsorbent material leading to a lower cycle time for the entire process and enhance productivity. The present disclosure provides thermal integration between the plurality of streams such as between the feed gas and the heating medium and between the exhaust from the cooling stage and the heating stage reducing the heat load of the swing-adsorption mechanism that greatly benefiting the operating cost of the entire process.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

It is intended that the disclosure and examples be considered as exemplary only, with a true scope of disclosed embodiments being indicated by the following claims.

## Claims

1. A method of gas separation, the method comprising:
directing (302), a pre-treated feed gas to a fixed bed,
wherein the fixed bed comprises one or more packed beds of one or more adsorbent material capable of adsorbing, and releasably binding, one or more target gas from the pre-treated feed gas, and wherein the pre-treated feed gas coming from a source through a heat recovery unit to the fixed bed gets processed in the heat recovery unit, and
wherein each packed bed of the one or more packed beds sequentially cycles through at least one of a plurality of stages of at least one swing-adsorption mechanisms comprising an adsorption stage, a heating stage, an evacuation stage, and a cooling stage at each timestamp, and
wherein each packed bed of the one or more packed beds has an entry or an exit for a plurality of lines comprising one or more feed lines and one or more product lines facilitating a plurality of gaseous transfers controlled by a plurality of valves,
wherein the at least one of the one or more packed beds of the fixed bed in the adsorption stage adsorbs the one or more target gas from the pre-treated feed gas and releases a lean gas from an associated exit, in the adsorption stage;
injecting (304), via the one or more feed lines, a processed stream of hot target gas from the entry of the at least one of the one or more packed beds in the heating stage, wherein the processed stream of hot target gas raises temperature of the at least one packed bed holding the one or more target gas adsorbed at the adsorption stage and exits the packed bed via the one or more product lines,
removing (306), via the one or more product lines, the adsorbed target gas from an exit of the at least one of the one or more packed beds in the evacuation stage by depressurization;
injecting (308), via the one or more feed lines, a pre-treated stream of air to the at least one of the one or more packed beds in the cooling stage, wherein the pre-treated stream of air reduces an excessive temperature of the at least one of the one or more packed beds, and a heated stream of air exits via the one or more product lines of the at least one of the one or more packed beds in the cooling stage;
processing (310), through the heat recovery unit, the plurality of gas streams coming from the one or more packed beds via the one or more product lines, and the pre-treated feed gas coming from the source via the one or more feed lines, wherein the heat recovery unit processes the plurality of gaseous transfers in a plurality of heat exchangers by a plurality of heat exchange mechanisms, to recover:
(i) the target gas released from the exit of the packed bed in the heating stage,
(ii) the target gas removed from the exit of the packed bed in the evacuation stage,
(iii) the heated stream of air released from the packed bed in the cooling stage,
(iv) the heated air from in the one or more heat exchanger, and
(v) the pre-treated feed gas received from the source.

2. The method as claimed in claim 1, wherein the source of the pre-treated feed gas is combustion of fossil fuels from one or more fossil fuel-based combustion engines, industrial furnaces, boilers and turbines.

3. The method as claimed in claim 1, wherein the pre-treated feed gas is obtained by treating a flue gas coming from the source to remove (i) one or more particulate matters, (ii) one or more oxides, and (iii) an excessive moisture when the one or more adsorbent material of the fixed bed is susceptible to the moisture.

4. The method as claimed in claim 1, wherein the swing-adsorption mechanisms for the gas separation from the fixed bed comprising the one or more packed beds is one of (a) a Temperature Vaccum Concentration Swing Adsorption (TVCSA), (b) a Temperature Swing Adsorption (TSA), (c) a Vaccum Swing Adsorption (VSA), (d) a Concentration Swing Adsorption (CSA), (e) a Pressure Swing Adsorption (PSA), and combinations thereof.

5. The method as claimed in claim 1, wherein the plurality of lines facilitating the plurality of gaseous transfers is controlled by the plurality of valves such that the entry and the exit to the one of the one or more packed beds undergoing one stage of the swing adsorption mechanisms is not affected by the entry and the exit to the one of the one or more packed bed undergoing another stage of the swing adsorption mechanisms.

6. The method as claimed in claim 1, wherein the pre-treated feed gas is obtained by processing a flue gas coming from the source and directed to the at least one packed bed of the plurality of packed beds at the adsorption stage, and wherein the processing of the flue gas comprises removal of (i) one or more particulate matters, (ii) one or more oxides, and (iii) an excessive moisture when the adsorbent material is susceptible to the moisture.

7. The method as claimed in claim 1, wherein the one or more adsorbent material is at least one of (i) an active structured or an active unstructured material, and (ii) a particulate material facilitating higher surface area for contact between phases for at least (a) an effective chemical reaction, (b) an effective mass transfer, (c) an effective heat transfer, and (d) a combination thereof, and wherein the adsorbent material is made of at least one of (i) a physio chemically active material, (ii) an inert material, wherein the physio chemically active material is coated or impregnated with an inert or support material, and (c) a combination thereof.

8. The method as claimed in claim 1, wherein a portion of the target gas exiting the at least one of the one or more packed beds at the heating stage gets reheated in the heat recovery unit and is re-circulated to the at least one of the one or more packed beds undergoing the heating stage thereby preventing cross contamination from any other heat source, and wherein the portion of the target gas re-circulated is proportional to a temperature required to heat the at least one of the one or more packed beds in the heating stage.

9. The method as claimed in claim 1, wherein the one or more adsorbent material of the plurality of packed beds cyclically undergo the swing-adsorption mechanisms until a working capacity of the one or more adsorbent material drops below a pre-set threshold making the adsorbent unsuitable for further processing and is followed by replenishing the fixed bed with a fresh stock of the adsorbent material.

10. The method as claimed in claim 1, wherein a cycle time of each stage of the at least one swing-adsorption mechanisms is scheduled in a manner that each packed-bed of the fixed bed undergo at least one stage of the at least one swing-adsorption mechanisms.

11. A device for gas separation, comprising:
(a) a fixed bed comprising one or more packed beds capable of adsorbing, and releasably binding, a target gas from the pre-treated feed gas, and
wherein each packed bed cycles through at least one of plurality of stages of a swing-adsorption mechanism comprising an adsorption stage, a heating stage, an evacuation stage, and a cooling stage at each timestamp sequentially, and
wherein each packed bed has an entry and an exit for a plurality of lines comprising one or more feed lines and one or more product lines facilitating a plurality of gaseous transfers controlled by a plurality of valves, and
(b) a heat recovery unit comprising (i) a plurality of heat exchangers and (ii) a mixer compartment, wherein the heat recovery unit processes a plurality of gas streams in the plurality of heat exchangers, by a plurality of heat exchange mechanisms, and wherein the plurality of gas streams coming from one or more feed lines and one or more products lines to the heat recovery unit exchanges heat, and wherein the one of the one or more gas streams at high temperature loses the heat to the one of the one or more gas streams at low temperature, and the one of the one or more gas streams at low temperature gains the heat from the one of the one or more gas streams at high temperature.

12. The device as claimed in claim 11,
wherein one of the one or more heat exchangers receive the stream of target gas exited from the one of the one or more packed beds in the heating stage and gains heat from the heated stream of air exited from the one of the one or more packed beds in the cooling stage, and carried to the one or more heat exchangers as a hot stream of target gas, and
wherein one of the one or more heat exchangers receive the hot stream of target gas coming from one of the one or more heat exchanger further gains the heat from the pre-treated feed gas coming from the source at higher temperature to acquire a temperature suitable for the heating stage, and
wherein one of the one or more heat exchangers receive the pre-treated feed gas coming from one of the one or more heat exchanger interacts with the ambient air before entering the one of the one or more packed beds in the adsorption stage and cools down to a temperature suitable for the adsorption stage, and
wherein the mixer compartment facilitate a mixing of (a) the stream of target gas exited from the one of the one or more packed beds in the evacuation stage, and (b) the hot stream of target gas exited from the one of the one or more packed beds in the heating stage to attain and equilibrium temperature and directs a mixed stream of equilibrium temperature to the one of the one or more heat exchangers.
